(19) Europäisches Patentamt
European Patent Office
Office européen des brevets

(11) **EP 1 009 612 B1**

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(21) Anmeldenummer: **98946407.8**

(22) Anmeldetag: **21.08.1998**

(51) Int Cl.[7]: **B29C 47/10**, C08J 3/20

(86) Internationale Anmeldenummer:
**PCT/EP98/05335**

(87) Internationale Veröffentlichungsnummer:
**WO 99/12721 (18.03.1999 Gazette 1999/11)**

# (54) VERFAHREN ZUR HERSTELLUNG VON EINGEFÄRBTEN FORMMASSEN

METHOD FOR PRODUCING DYED MOULDING MATERIALS

PROCEDE DE PRODUCTION DE MATIERES DE MOULAGE A L'ETAT COLORE

(84) Benannte Vertragsstaaten:
**BE DE ES FR GB IT NL**

(30) Priorität: **05.09.1997 DE 19738861**

(43) Veröffentlichungstag der Anmeldung:
**21.06.2000 Patentblatt 2000/25**

(73) Patentinhaber: **BASF AKTIENGESELLSCHAFT**
**67056 Ludwigshafen (DE)**

(72) Erfinder:
- **GUTSCHE, Herbert**
  **D-67659 Kaiserslautern (DE)**
- **ANDERLIK, Rainer**
  **D-69126 Heidelberg (DE)**
- **KRESS, Norbert**
  **D-67069 Ludwigshafen (DE)**
- **GRESS, Dieter**
  **D-74909 Meckesheim (DE)**
- **BRIAN, Bernd**
  **D-67246 Dirmstein (DE)**
- **BAIERWECK, Petra**
  **D-67459 Böhl-Iggelheim (DE)**
- **MOSNER, Herbert**
  **D-68623 Lampertheim (DE)**
- **BRANDT, Hermann**
  **D-67434 Neustadt (DE)**
- **HEEL, Helmut**
  **D-67125 Dannstadt-Schauernheim (DE)**

(56) Entgegenhaltungen:
**US-A- 3 892 390**
**US-A- 4 937 034**
**US-A- 5 486 327**

- **PATENT ABSTRACTS OF JAPAN vol. 017, no. 026 (M-1354), 19. Januar 1993 & JP 04 250012 A (MEIKI CO LTD), 4. September 1992**
- **PATENT ABSTRACTS OF JAPAN vol. 016, no. 047 (M-1208), 6. Februar 1992 & JP 03 251420 A (MEIKI CO LTD), 8. November 1991**
- **PATENT ABSTRACTS OF JAPAN vol. 016, no. 077 (M-1214), 25. Februar 1992 & JP 03 264319 A (TOYODA GOSEI CO LTD), 25. November 1991**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 009 612 B1

Printed by Jouve, 75001 PARIS (FR)

## Beschreibung

Die Erfindung betrifft ein verbessertes Verfahren zur Herstellung von eingefärbten thermoplastischen Formmassen.

Das Einfärben von Thermoplasten mittels Schneckenmaschinen ist seit langem bekannt.

Häufig wird dazu Thermoplast-Granulat zusammen mit einer Pigmentpulvermischung in den Trichter einer Schneckenmaschine dosiert. Nachteilig an dieser Verfahrensweise ist der Umstand, daß sich feine Pigmentpulverpartikel an den Trichterwandungen anlagern können und dadurch Pigmentschichten bilden, die sich in unregelmäßigen Abständen lösen oder von Granulatpartikeln mitgerissen werden.

Als Folge davon können unerwünschte Konzentrationsschwankungen des Pigmentes im eingefärbten Polymer auftreten.

Die US 4 937 034, JP-A-4250012, und US 3 892 390 beschreiben Vorrichtungen und verfahren, in denen die Fallwege des Pigmentpulvers durch konstruktive Ausführungen des Einzugstrichters der Schneckenmaschine verkürzt wurden.

In der US 4 937 034 wird die gleichzeitige Dosierung von Additivkonzentrat und Polymerpartikeln in einen Extruder beschrieben, worin der über den Einzugsbereich des Einfärbeextruders befindliche Trichter eine Bohrung aufweist über die mittels einer Seitendosierschnecke das Additivkonzentrat in den Trichter gefördert wird. Damit der Dosierstrom der Additive vom Polymerhauptstrom unbeeinflußt bleibt, wird der Additivstrom durch ein Leitblech vom Polymerpartikelstrom abgeschirmt. Beide Teilströme gelangen über eine gemeinsame Fallstrecke in den Einzugsbereich des Extruders.

US-Patent 3 892 390 offenbart eine Vorrichtung, in der der Einzugstrichter eines Einfärbeextruders eine Bohrung aufweist, über die mittels einer angeflanschten Förderschnecke Additive in den Trichter gelangen. Die Thermoplastkomponente gelangt so zusammen mit den Additiven in den Einzugsbereich der Extruderschnecke.

In den genannten Verfahren werden Teile des Extrudertrichters mit Pigmentpulvern benetzt, was Farbkonstanzschwankungen und verlängerte Umstellzeiten bei Farbwechseln verursacht.

Eine weitere, häufig bei der Einfärbung mit Pigmentpulvern realisierte Verfahrensvariante besteht darin, Thermoplastgranulate mit den Pigmentpulvern und gegebenenfalls weiteren Additiven in einem Vormischer zu mischen. Unter Zuhilfenahme von Ölen oder Wasser oder anderen Flüssigkeiten wird die Oberfläche der Thermoplastgranulate mit einem niedermolekularen Film benetzt, so daß die Additive an den Granulaten haften.

Nachteilig an diesem Verfahren ist die zusätzliche Einbringung einer niedermolekularen Substanz, welche zu unerwünschten Änderungen des Farbtons und z.B. der mechanischen Eigenschaften der eingefärbten Formmassen führt.

Auch durch dieses verfahren wird der Trichter des Einfärbeextruders und vorgeschaltete Rohrleitungen mit Pulvern benetzt, die sich in unregelmäßigen Abständen von den Wandungen der Rohrleitungen und Trichter lösen und Farbkonstanzschwankungen sowie einen hohen Reinigungsaufwand bei Farbwechseln verursachen.

Der vorliegenden Erfindung lag daher die Aufgabe zugrunde, ein verbessertes Herstellverfahren für eingefärbte thermoplastische Formmassen zur Verfügung zu stellen, welches zu einer besseren Farbkonstanz (Einfärbequalität) und zu einem geringeren Reinigungs- und Zeitaufwand bei Farbwechseln führt.

Demgemäß wurde ein kontinuierliches Verfahren zur Herstellung von eingefärbten thermoplastischen Formmassen in einem Extruder gefunden, welches dadurch gekennzeichnet ist, daß man

I) in einer ersten Zone
  A) 10 bis 99,999 Gew.-% eines thermoplastischen Polymeren in einen Extruder dosiert und

II) in einer folgenden Zone bei Temperaturen unterhalb der jeweiligen Glasübergangstemperatur des Thermoplasten A)
  B) 0,001 bis 60 Gew.-% eines Farbmittels

zusetzt und anschließend die Thermoplast/Farbmittel-Mischung in den folgenden Zonen erhitzt sowie die Polymerschmelze homogenisiert und die erhaltene Mischung extrudiert.

Mittels des erfindungsgemäßen Verfahrens werden Farbpigmentpulver und Thermoplastpartikel getrennt in den Einfärbeextruder dosiert und zwar in der Weise, daß zuerst das Thermoplastmaterial über den Trichter in den Einfärbeextruder gelangt und erst stromabwärts über eine Öffnung im Extrudergehäuse die Pigmentpulver mittels einer Stopfschnecke oder anderen geeigneten Fördergeräte zugeführt werden.

Das Pigmentpulver gelangt an der Stelle in den Extruder, wo das Thermoplastmaterial noch als Feststoff vorliegt. Da an dieser Stelle die Schneckenkanäle mit Thermoplastgranulat oder Thermoplastgries gefüllt sind, wird eine Rückströmung von Pulver in den Trichter vermieden, so daß dort kaum Pigmentablagerungen entstehen können, die bei Farbwechseln Stillstandzeiten nach sich ziehen.

Die Schnecke des Einfärbeextruders streift die Pigmentdosierstelle ständig ab, so daß sich auch dort kaum Ablagerungen bilden können.

Da an der Stelle der Pigmentdosierung der Kunststoff noch unaufgeschmolzen vorliegt, werden Anbackungen und Verkrustungen vermieden. Bei Farbwechseln wird die Pigmentpulverstopfschnecke gegen eine zweite saubere Stopfschnecke ausgetauscht. Die Zeiten zwischen der Produktion zweier verschieden eingefärbten Kunststoffe können daher deutlich reduziert werden.

Grundsätzlich zeigt sich der vorteilhafte Effekt bei Kunststoffen jeglicher Art. Eine Aufzählung geeigneter Thermoplaste A) findet sich beispielsweise im Kunststoff-Taschenbuch (Hrsg. Saechtling), Auflage 1989, wo auch Bezugsquellen genannt sind. Verfahren zur Herstellung solcher thermoplastischer Kunststoffe sind dem Fachmann an sich bekannt. Nachstehend seien einige bevorzugte Kunststoffarten etwas näher erläutert.

1. Polyoxymethylenhomo- oder -copolymerisate

Derartige Polymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten $-CH_2O-$ noch bis zu 50, vorzugsweise 0,1 bis 20, insbesondere 0,3 bis 10 mol-% und ganz besonders bevorzugt 2 bis 6 mol-% an wiederkehrenden Einheiten

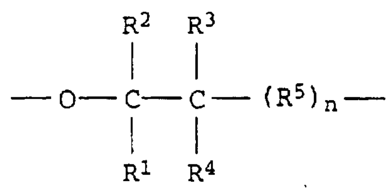

wobei $R^1$ bis $R^4$ unabhängig voneinander ein Wasserstoffatom, eine $C_1$-bis $C_4$-Alkylgruppe oder eine halogensubstituierte Alkylgruppe mit 1 bis 4 C-Atomen und $R^5$ eine $-CH_2-$, $-CH_2O-$, eine $C_1$-bis $C_4$-Alkyl- oder $C_1$-bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

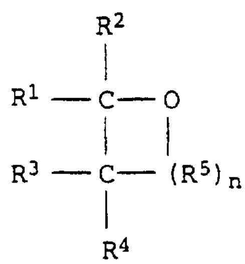

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel

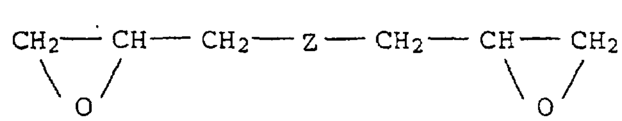

und/oder

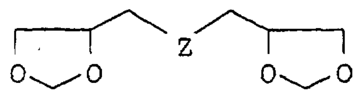

wobei Z eine chemische Bindung, -O-, -ORO- (R= $C_1$-bis $C_8$-Alkylen oder $C_2$-bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) $M_w$ im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

2. Polycarbonate und Polyester

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 23°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i-bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i-bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol, 1,4-Cyclohexandimethylanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat oder deren Mischungen bevorzugt, wobei auch Polyethylenterephthalat als Rezyklat bis zu 50 Gew.-%, bezogen auf A), eingesetzt werden kann.

Die Viskositätszahl der Polyester (A) liegt im allgemeinen im Bereich von 60 bis 220, vorzugsweise von 100 bis 150 (gemessen in einer 0,5 gew.-%igen Lösung in einem Phenol/o-Dichlorbenzolgemisch (Gew.-Verh. 1:1 bei 25°C).

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

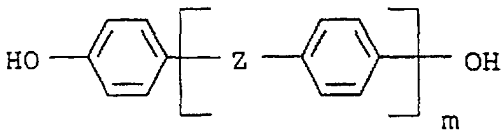

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen I können an den Phenylengruppen auch $C_1$-$C_6$-Alkyl- oder Alkoxygruppen und Fluor, Chlor oder Brom als Substituenten tragen.

Als Stammkörper dieser Verbindungen seinen beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden

4,4' -Dihydroxydiphenyl,
2,4-Di-(4'-hydroxyphenyl)-2-methylbutan
α,α'-Di-(4-hydroxyphenyl)-p-diisopropylbenzol,
2,2-Di(3'-methyl-4'-hydroxyphenyl)propan und
2,2-Di-(3'-chlor-4'-hydroxyphenyl)propan,

sowie insbesondere

2,2-Di-(4'-hydroxyphenyl)propan
2,2-Di(3',5'-dichlordihydroxyphenyl)propan.
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1) bei 23°C).

3. Polyolefine

Hier sind ganz allgemein Polyethylen und Polypropylen sowie Copolymerisate auf der Basis von Ethylen oder Propylen, ggf. auch mit höheren $\alpha$-Olefinen zu nennen. Entsprechende Produkte sind unter den Handelsnamen Lupolen® bzw. Novolen® von der BASF Aktiengesellschaft erhältlich.

4. Polymethacrylate

Hierunter sind insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl® von der BASF Aktiengesellschaft oder Plexiglas® von Röhm GmbH erhältlich sind.

5. Polyamide

Die Polyamide der erfindungsgemäßen Formmassen weisen im allgemeinen eine Viskositätszahl von 90 bis 350, vorzugsweise 110 bis 240 ml/g auf bestimmt in einer 0,5 gew.-%-igen Lösung in 96 gew.%iger Schwefelsäure bei 25°C auf gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di- (4-aminocyclohexyl) -methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.
Selbstverständlich können auch Mischungen (Blends) derartiger Polymere eingesetzt werden.

6. Vinylaromatische Polymere

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.
Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können.
Die Herstellung erfolgt vorzugsweise nach dem in der EP-A-302 485 beschriebenen Verfahren.
Bevorzugte ASA-Polymerisate sind aufgebaut aus einer Weich- oder Kautschukphase aus einem Pfropfpolymerisat aus:

$A_1$ 50 bis 90 Gew.-% einer Pfropfgrundlage auf Basis von

- $A_{11}$ 95 bis 99,9 Gew.-% eines $C_2$-$C_{10}$-Alkylacrylats und
- $A_{12}$ 0,1 bis 5 Gew.-% eines difunktionellen Monomeren mit zwei olefinischen, nicht konjugierten Doppelbindungen, und

$A_2$ 10 bis 50 Gew.-% einer Pfropfauflage aus

- $A_{21}$ 20 bis 50 Gew.-% Styrol oder substituierten Styrolen der allgemeinen Formel I oder deren Mischungen, und
- $A_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren A3) aus:

$A_{31}$ 50 bis 90, vorzugsweise 55 bis 90 und insbesondere 65 bis 85 Gew.-% Styrol und/oder substituierten Styrolen der allgemeinen Formel I und
$A_{32}$ 10 bis 50, vorzugsweise 10 bis 45 und insbesondere 15 bis 35 Gew.-% Acrylnitril und/oder Methacrylnitril.

Bei der Komponente $A_1$) handelt es sich um ein Elastomeres, welches eine Glasübergangstemperatur von unter -20, insbesondere unter -30°C aufweist.
Für die Herstellung des Elastomeren werden als Hauptmonomere $A_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.
Neben diesen Estern der Acrylsäure werden 0,1 bis 5, insbesondere 1 bis 4 Gew.-%, bezogen auf das Gesamtgewicht $A_{11}$ + $A_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.
Verfahren zur Herstellung der Pfropfgrundlage $A_1$ sind an sich bekannt und z.B. in der DE-B 1 260 135 beschrieben. Entsprechende Produkte sind auch kommerziell im Handel erhältlich.
Als besonders vorteilhaft hat sich in einigen Fällen die Herstellung durch Emulsionspolymerisation erwiesen.
Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $A_1$ am Pfropfpolymerisat $A_1$+$A_2$ beträgt 50 bis 90, vorzugsweise 55 bis 85 und insbesondere 60 bis 80 Gew.-%, bezogen auf das Gesamtgewicht von $A_1$+$A_2$.

Auf die Pfropfgrundlage $A_1$ ist eine Pfropfhülle $A_2$ aufgepfropft, die durch Copolymerisation von

$A_{21}$ 20 bis 90, vorzugsweise 30 bis 90 und insbesondere 30 bis 80 Gew.-% Styrol oder substituierten Styrolen der allgemeinen Formel

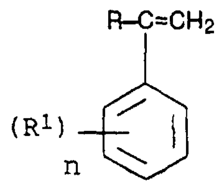

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$A_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind $\alpha$-Methylstyrol, p-Methylstyrol, p-Chlorstyrol und p-Chlor-$\alpha$-Methylstyrol, wovon Styrol und $\alpha$-Methylstyrol bevorzugt werden.

Bevorzugte Acryl- bzw. Methacrylsäureester sind solche, deren Homopolymere bzw. Copolymerisate mit den anderen Monomeren der Komponente $A_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $A_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $A_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $A_1$ + $A_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $D_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($A_1$+$A_2$) zählen im Rahmen dieser Erfindung auch die bei der Pfropfmischpolymerisation zur Herstellung der Komponente $A_2$) entstehenden freien, nicht gepfropften Homo- und Copolymerisate.

Nachstehend seien einige bevorzugte Pfropfpolymerisate angeführt:

1: 60 Gew.-% Pfropfgrundlage $A_1$ aus
$A_{11}$ 98 Gew.-% n-Butylacrylat und
$A_{12}$ 2 Gew.-% Dihydrodicyclopentadienylacrylat und

40 Gew.-% Pfropfhülle $A_2$ aus
$A_{21}$ 75 Gew.-% Styrol und
$A_{22}$ 25 Gew.-% Acrylnitril

2: Pfropfgrundlage wie bei 1 mit 5 Gew.-% einer ersten Pfropfhülle aus Styrol
und
35 Gew.-% einer zweiten Pfropfstufe aus
$A_{21}$ 75 Gew.-% Styrol und
$A_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $A_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.
Das Gewichtsverhältnis von ($A_1$ + $A_2$):$A_3$ liegt im Bereich von 1:2,5 bis 2,5:1, vorzugsweise von 1:2 bis 2:1 und insbesondere von 1:1,5 bis 1,5:1.
Geeignete SAN-Polymere als Komponente A) sind vorstehend (siehe $A_{31}$ und $A_{32}$) beschrieben.
Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.
ABS-Polymere als Polymer (A) in den erfindungsgemäßen mehrphasigen Polymermischungen weisen den gleichen Aufbau wie vorstehend für ASA-Polymere beschrieben auf. Anstelle des Acrylatkautschukes $A_1$) der Pfropfgrundlage beim ASA-Polymer werden üblicherweise konjugierte Diene, eingesetzt, so daß sich für die Pfropfgrundlage $A_4$ vorzugsweise folgende Zusammensetzung ergibt:

$A_{41}$ 70 bis 100 Gew.-% eines konjugierten Diens und
$A_{42}$ 0 bis 30 Gew.-% eines difunktionellen Monomeren mit zwei olefinischen nicht-konjugierten Doppelbindungen

Pfropfauflage $A_2$ und die Hartmatrix des SAN-Copolymeren $A_3$) bleiben in der Zusammensetzung unverändert. Derartige Produkte sind im Handel erhältlich. Die Herstellverfahren sind dem Fachmann bekannt, so daß sich weitere Angaben hierzu erübrigen.
Das Gewichtsverhältnis von ($A_4$ + $A_2$):$A_3$ liegt im Bereich von 3:1 bis 1:3, vorzugsweise von 2:1 bis 1:2.
Besonders bevorzugte Zusammensetzungen der thermoplastischen Formmassen enthalten als Komponente A) eine Mischung aus:

$A_1$) 10 bis 90 Gew.-% eines Polybutylenterephthalates
$A_2$) 0 bis 40 Gew.-% eines Polyethylenterephthalates
$A_3$) 1 bis 40 Gew.-% eines ASA- oder ABS-Polymeren oder deren Mischungen

Derartige Produkte sind unter dem Warenzeichen Ultradur® S (ehemals Ultrablend® S) von der BASF Aktiengesellschaft erhältlich.
Weitere bevorzugte Zusammensetzungen der Komponente A) enthalten

$A_1$) 10 bis 90 Gew.-% eines Polycarbonates
$A_2$) 0 bis 40 Gew.-% eines Polyesters, vorzugsweise Polybutylenterephthalat,
$A_3$) 1 bis 40 Gew.-% eines ASA- oder ABS-Polymeren oder deren Mischungen.

Derartige Produkte sind unter dem Warenzeichen Terblend® der BASF AG erhältlich.

7. Polyarylenether

Unter Polyarylenethern A) sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen

Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, $C_1$- bis $C_{10}$-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Diese können neben -O-, z.B. über -S-, -SO-, $-SO_2-$, -CO-, -N=N-, -COO-, einen Alkylenrest oder eine chemische Bindung miteinander verknüpft sein. In den Polyarylenethern (B) können die Arylengruppen auch über unterschiedliche Gruppen miteinander verknüpft sein.

Zu den bevorzugten Polyarylenethern zählen solche mit wiederkehrenden Einheiten der allgemeinen Formel I

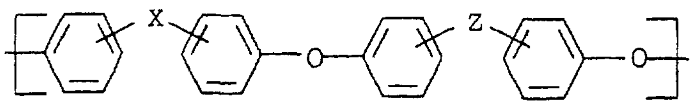

(I)

Ebenso können deren kernsubstituierten Derivate verwendet werden. Als Substituenten kommen vorzugsweise $C_1$-$C_6$-Alkyl, wie Methyl, Ethyl oder t-Butyl, $C_1$-$C_6$-Alkoxy, wie Methoxy oder Ethoxy, Aryl, insbesondere Phenyl, Chlor oder Fluor in Betracht. Die Variable X kann $-SO_2-$, -SO-, -S-, -O-, CO, -N=N-, $-RC=CR^a-$, $-CR^bR^c-$ oder eine chemische Bindung sein. Die Variable Z kann für $-SO_2-$, -SO-, -CO-, -O-, -N=N- oder $-RC=CR^a$ stehen. Hierbei stellen R und $R^a$ jeweils Wasserstoff, $C_1$-$C_6$-Alkyl, z.B. Methyl, n-Propyl oder n-Hexyl, $C_1$-$C_6$-Alkoxy, darunter Methoxy, Ethoxy oder Butoxy oder Aryl, insbesondere Phenyl dar. Die Reste $R^b$ und $R^c$ können jeweils Wasserstoff oder eine $C_1$- bis $C_6$-Alkylgruppe, insbesondere Methyl, darstellen. Sie können aber auch zu einem $C_4$- bis $C_{10}$-Cycloalkylring, bevorzugt Cyclopentyl- oder Cyclohexylring, miteinander verknüpft sein, der seinerseits mit einer oder mehreren Alkylgruppen, vorzugsweise Methyl substituiert sein kann. Daneben können $R^b$ und $R^c$ auch eine $C_1$- bis $C_6$-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Im folgenden sind einige der bevorzugten wiederkehrenden Einheiten I aufgeführt:

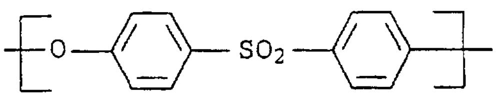

($I_1$)

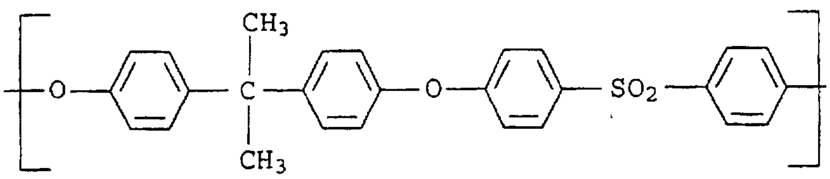

($I_2$)

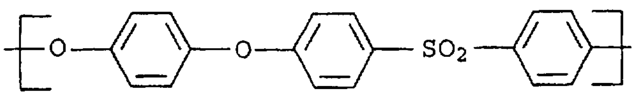

($I_3$)

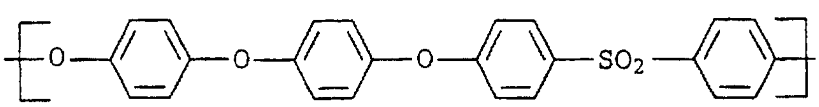

($I_4$)

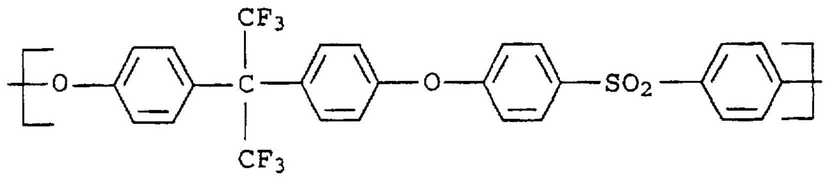

(I5)

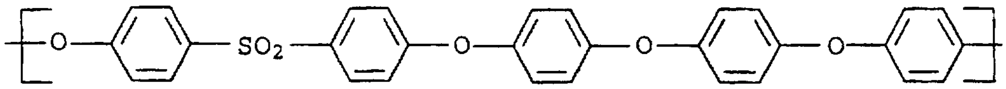

(I6)

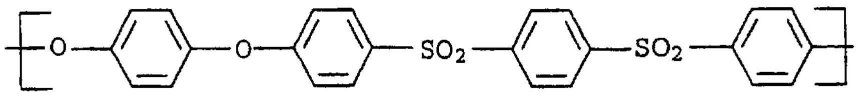

(I7)

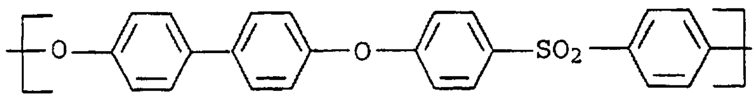

(I8)

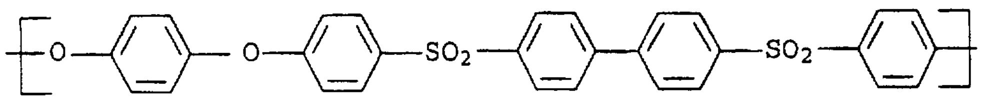

(I9)

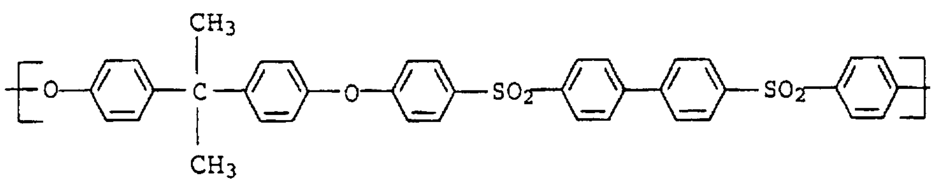

(I10)

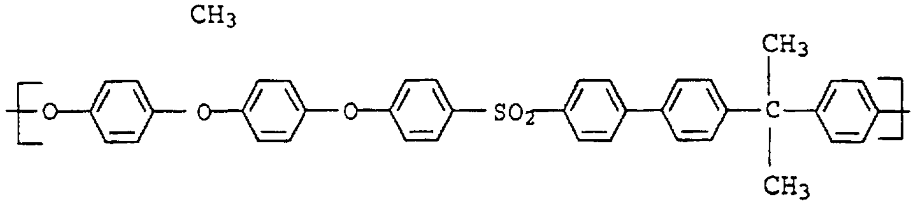

(I11)

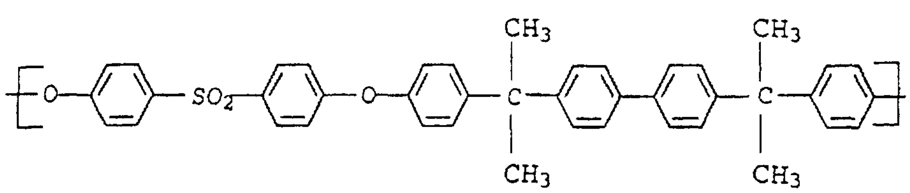

(I12)

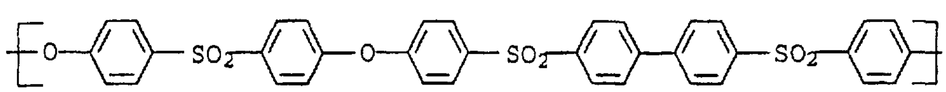

(I13)

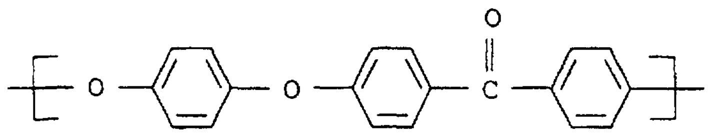

(I14)

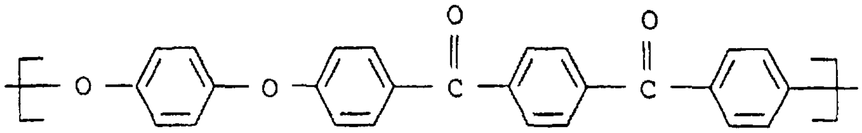

(I15)

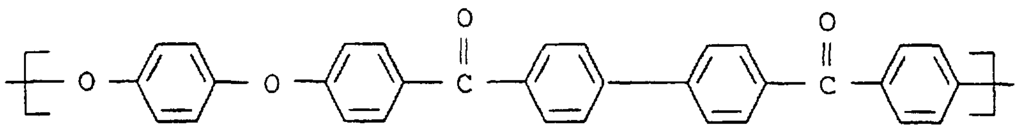

(I16)

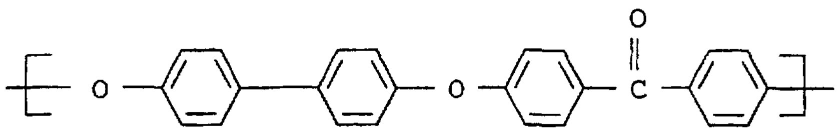

(I17)

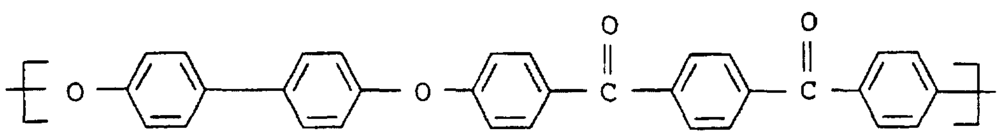

(I18)

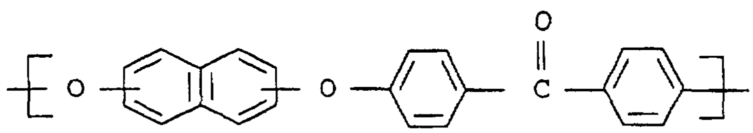

(I19)

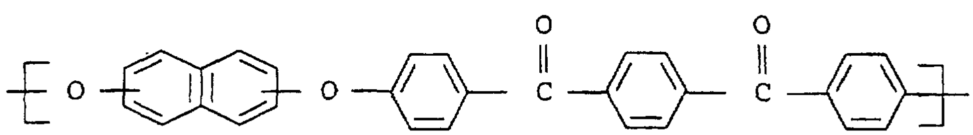

(I20)

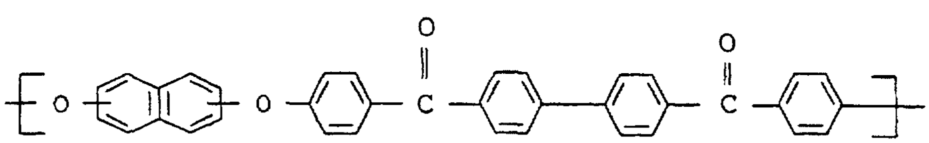

(I21)

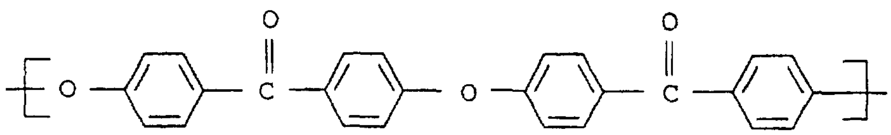

(I22)

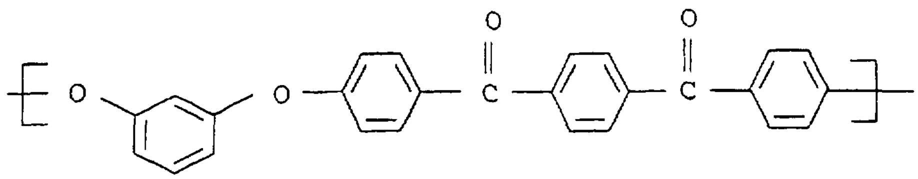

(I23)

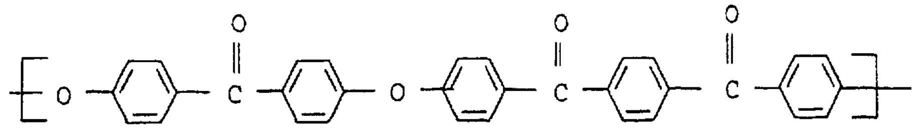

(I24)

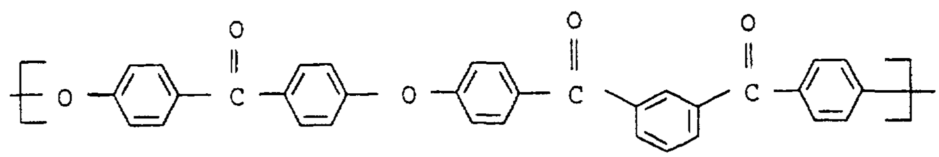

(I25)

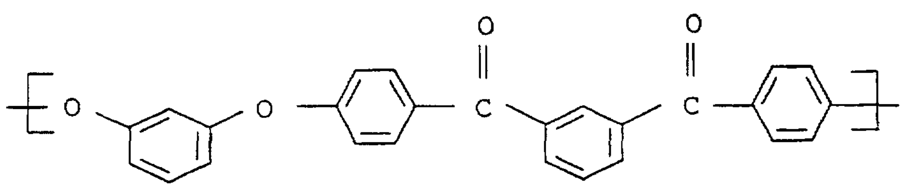

(I26)

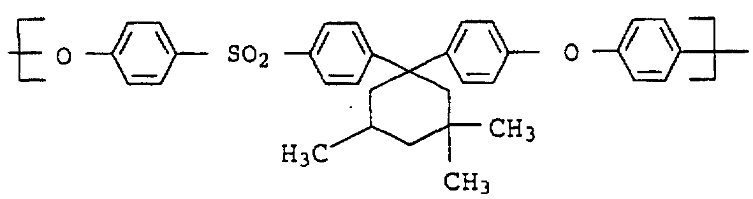

(I27)

Ganz besonders werden Polyarylenether bevorzugt, die als wiederkehrende Einheiten ($I_1$), ($I_2$), ($I_{24}$) oder ($I_{25}$) enthalten. Dazu zählen beispielsweise Polyarylenethersulfone mit 0 bis 100 Mol-%, bevorzugt 5 bis 95 Mol-% Struktureinheiten ($I_1$) und 0 bis 100 Mol-%, bevorzugt 5 bis 95 Mol-% Struktureinheiten ($I_2$) enthalten.

Die Polyarylenether können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte der Blöcke- bzw. der Pfropfarme in den Copolymeren liegt in der Regel im Bereich von 1 000 bis 30 000 g/mol. Die Blöcke unterschiedlicher Struktur können alternierend oder statistisch angeordnet sein. Der Gewichtsanteil der Polyarylenethersegmente in den Co- oder Blockcopolymeren beträgt im allgemeinen mindestens 3, vorzugsweise mindestens 10 Gew.-%. Der Gewichtsanteil der Polyarylenethersulfone oder -ketone kann bis zu 97 Gew.-% betragen. Bevorzugt

werden Co- oder Blockcopolymere mit einem Gewichtsanteil an Polyarylenethersegmenten mit bis zu 90 Gew.-%. Besonders bevorzugt werden Co- oder Blockcopolymere mit 20 bis 80 Gew.-% Polyarylenethersegmenten.

Im allgemeinen weisen die Polyarylenether mittlere Molekulargewichte $\overline{M}_n$ (Zahlenmittel) im Bereich von 10 000 bis 60 000 g/mol und Viskositätszahlen von 30 bis 150 ml/g auf. Die Viskositätszahlen werden je nach Löslichkeit der Polyarylenether (A) bzw. (B) entweder in 1 gew.-%iger N-Methylpyrrolidon-Lösung, in Mischungen aus Phenol und o-Dichlorbenzol oder in 96 %iger Schwefelsäure bei jeweils 20°C bzw. 25°C gemessen.

Die Polyarylenether sind an sich bekannt oder können nach an sich bekannten Methoden hergestellt werden.

So lassen sich beispielsweise Polyphenylenether durch oxidative Kupplung von Phenolen herstellen. Polyarylenethersulfone oder -ketone entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden.

Bevorzugt werden die Monomeren in der Schmelze oder in einem inerten hochsiedenden Lösungsmittel durchgeführt. Zu diesen zählen Chlorbenzol, Dichlorbenzol, Xylol und Trichlorbenzol. Daneben kommen Sulfone oder Sulfoxide, darunter vor allem Dimethylsulfon, Diethylsulfon, 1,1-Dioxotetrahydrothiophen (Sulfolan) oder Diphenylsulfon, Dimethylsulfoxid oder Diethylsulfoxid, bevorzugt Dimethylsulfoxid, in Betracht. Zu den bevorzugten Lösungsmitteln zählen auch N-Alkylpyrrolidone, insbesondere N-Methylpyrrolidon. Weiterhin können N-substituierte Säureamide, beispielsweise N,N-Dimethylformamid oder N,N-Dimethylacetamid eingesetzt werden. Es ist auch möglich, Mischungen unterschiedlicher Lösungsmittel zu verwenden.

Bevorzugte Verfahrensbedingungen zur Synthese von Polyarylenethersulfonen oder -ketonen sind beispielsweise in der EP-A-113 112 und 135 130 beschrieben.

Die bevorzugten Polyarylenether weisen in der Regel einen Schmelzpunkt von mindestens 320°C (Polyarylenethersulfone) bzw. von mindestens 370°C (Polyarylenetherketone) auf.

Erfindungsgemäß können die Formmassen Polyarylenethersulfone oder -ketone enthalten, die durch Umsetzen eines Polyarylenethersulfons oder -ketons mit einer reaktiven Verbindung erhältlich sind. Die reaktiven Verbindungen enthalten neben einer C,C-Doppel- oder Dreifachbindung eine bzw. mehrere Carbonyl-, Carbonsäure-, Carboxylat-, Säureanhydrid-, Säureimid-, Carbonsäureester-, Amino-, Hydroxyl-, Epoxi-, Oxazolin-, Urethan-, Harnstoff-, Lactam- oder Halogenbenzylgruppe.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$-$C_{18}$-Alkanolen, die Mono- oder Diamide dieser Säuren wie N-Phenylmaleinimid, Maleinsäurehydrazid.

Bevorzugt werden α, β-ungesättigte Dicarbonsäuren bzw. deren Anhydride, Di-Ester und Mono-Ester der nachstehenden allgemeinen Struktur IV und V verwendet.

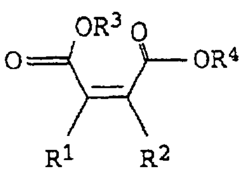

(IV)

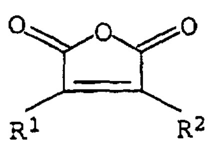

(V)

wobei

$R^1$, $R^2$, $R^3$ und $R^4$ unabhängig voneinander Wasserstoff sowie $C_1$-$C_{18}$-Alkyl-Gruppen sein können.

Besonders geeignete Verbindungen sind Maleinsäureanhydrid, Fumarsäure und Itaconsäure.

Die Polymeren und die reaktive Verbindung können z.B. in einem aromatischen Lösungsmittel miteinander umgesetzt werden. Als besonders geeignete Lösungsmittel haben sich Chlorbenzol, o-Dichlorbenzol und N-Methylpyrrolidon erwiesen. Dabei wird im allgemeinen ein üblicher Radikalinitiator eingesetzt. Die Umsetzung wird im allgemeinen bei 75 - 150°C ausgeführt. Das Reaktionsprodukt wird durch Fällung mit einem üblichen Fällungsmittel, wie niedermolekularer Alkohol und Keton, oder durch Entfernen des Lösungsmittels (z.B. im Entgasungsextruder, Dünnschichtverdampfer), gewonnen.

Die Reaktionsteilnehmer können aber beispielsweise auch bei einer Temperatur von 270 - 350°C in der

Schmelze in einem kontinuierlich oder absatzweise arbeitenden Mischaggregat (z.B. Ein- oder Zweiwellenextruder, Kneter) umgesetzt, werden.

Die reaktive Verbindung wird dabei vorzugsweise in flüssiger Form, insbesondere innerhalb der Knetzone eines Mischaggregats zur Schmelze des Polymeren zudosiert.

Bevorzugt werden modifizierte Polyarylenethersulfone oder -ketone eingesetzt, die durch Umsetzen von 80 bis 99,9 Gew.-%, insbesondere 90 bis 99 Gew.-% des unmodifizierten Polyarylenethersulfonen oder -ketonen, mit 0,1 bis 20 Gew.-%, insbesondere 1 bis 10 Gew.-% der reaktiven Verbindung erhalten worden sind.

Besonders bevorzugt werden als Komponente mit 0,1 bis 1,5 Gew.-% Maleinsäureanhydrid gepfropfte Polyarylenethersulfone. Dabei werden Polyarylenethersulfone, enthaltend 5 bis 95 Mol-% Einheiten $I_1$ und 5 bis 95 Mol-% Einheiten $I_2$ bevorzugt.

Polyarylenethersulfone mit 80 bis 95, vorzugsweise 85 bis 95 mol-% Einheiten der Formel $I_2$ und $I_1$ und entsprechend 5 bis 20, vorzugsweise 5 bis 15 mol-% Einheiten der Formel $I_1$ bzw. $I_2$ seien hier insbesondere erwähnt.

Als Radikalstarter können in der Regel die in der Fachliteratur (z.B. J.K. Kochi, "Free Radicals", J. Wiley, New York, 1973) beschriebenen Verbindungen Verwendung finden.

Üblicherweise werden die Radikalstarter in Mengen von etwa 0,01 bis etwa 1 Gew.-%, bezogen auf die eingesetzten Polyarylenethersulfone oder -ketone verwendet. Selbstverständlich können auch Mischungen unterschiedlicher Radikalstarter eingesetzt werden.

Entsprechend modifizierte Polyphenylenether sind u.a. aus der WO 87/00540 bekannt, welche insbesondere in Mischungen mit Polyamid eingesetzt werden können.

Der Gewichtsanteil an thermoplastischen Kunststoffen liegt im allgemeinen im Bereich von 10 bis 99,999, vorzugsweise 45 bis 99,99 und insbesondere von 90 bis 99,9 Gew.-%.

Unter einem Farbmittel B) versteht man im allgemeinen alle farbgebenden Stoffe nach DIN 55944, welche in anorganische und organische Farbmittel sowie natürliche und synthetische einteilbar sind (s. Römpps Chemie Lexikon, 1981, 8. Auflage, S. 1237).

Geeignete Farbmittel sind aus der Gruppe der schwarz-, weiß-, rot-, grün-, gelb- und blaufarbigen Pigmente ausgewählt und werden vorzugsweise in Pulverform eingesetzt.

Pigmente gehören sowohl zu den organischen als auch zu den anorganischen Farbmitteln und unterscheiden sich von Farbstoffen insofern, daß Pigmente in Lösungs- und/oder Bindemitteln unlösliche Farbstoffe sind. Diese werden im allgemeinen gemäß dem Colour Index (C.I.) klassifiziert, wobei zusätzlich zu systematischen oder Trivialnamen eine eindeutige Zuordnung ermöglichende C.I. Bezeichnung hinzugefügt wird.

Als bevorzugte Pigmente seien Kupferphthalocyaninpigmente genannt, welche eine grüne oder blaue Farbe aufweisen. Die grüne Farbe wird im allgemeinen durch Substitution von Wasserstoff durch Chloratome am macrocyclischen Tetraamin erzielt.

Weitere geeignete Pigmente sind Ultramarin-Pigmente (Natrium-Aluminiumsilikate), Blau und Grünpigmente auf der Basis von z.B. Chromoxiden oder Kobaltoxiden mit Spinellstruktur. Derartige Pigmente sind unter den Handelsnamen Heliogen® -blau, Heliogen® -grün, Sicopal® -grün, Sicopal®-blau (eingetragene Warenzeichen der BASF AG) sowie als Ultramarin- oder Chromoxid-Pigmente im Handel erhältlich.

Bevorzugte Pigmente sind gemäß C.I. Teil 1 Pigment blue 15, Pigment blue 15:2, Pigment blue 15:4, Pigment blue 28, Pigment blue 29, Pigment blue 36, Pigment green 7, Pigment green 50, Pigment violet 15 Pigment violet 16, Pigment brown 24, Pigment brown 29, Pigment Yellow 164, und Pigment yellow 53, wobei Pigment blue 15:1 und 15:3 sowie 36 und Pigment green 7 besonders bevorzugt sind.

Die Pigmente weisen im allgemeinen einen mittleren Teilchendurchmesser von 0,3 bis 8 µm bevorzugt von 0,7 bis 7 µm auf.

Die Elementarzelle des Spinellgitters enthält 32 Sauerstoffatome, die eine annähernd kubisch dichteste Kugelpackung bilden. In der normalen Spinellstruktur befinden sich 8 $Me^{2+}$-Ionen jeweils im Mittelpunkt von aus 4 $O^{2-}$-Ionen gebildeten Oktaedern (Oktaeder-Lagen). Bei der sogenannten inversen Spinellstruktur ist die Verteilung der Kationen eine andere. Die Hälfte der $Me^{3+}$-Ionen besetzt die Tetraederlagen, die andere Hälfte ist zusammen mit den $Me^{2+}$-Ionen auf die Oktaederlagen verteilt. Auch Übergänge zwischen den beiden Strukturen mit nicht geordneter Verteilung der Kationen sind möglich. Man kann die normale und die inverse Struktur durch die Formeln $Me^{2+}[Me_2^{3+}]O_4$, und $Me^{3+}[Me^{2+}Me^{3+}]O_4$, kennzeichnen.

Unter den Ferriten findet man Vertreter beider Strukturen: Der Zinkferrit besitzt die normale Struktur $Zn[Fe_2]O_4$, im Magnesiumferrit dagegen sind die Kationen ganz überwiegend wie im inversen Spinell verteilt: $Fe^{3+}[Mg^{2+}Fe^{3+}]O_4$.

Als Beispiele für zweiwertige Metalle seien Mg, Fe(II), Zn, Mn, Co, Ni, Cu, Cd genannt, als dreiwertige Metalle seien Al, Fe(III), V, Cr oder Titan genannt. Bevorzugte Eisenoxidpigmente sind Magnetit (inverser Spinell $Fe^{3+}[Fe^{2+}Fe^{3+}]O_4$), $Cr^{3+}[Cu^{II}, Fe^{II}]O_4$ und Mischphasenpigmente aus $Fe_2O_3/Mn_2O_3$.

Bei diesen Mischphasenpigmenten werden Gastionen in bestimmte Wirtsgitter eingebaut, wodurch sich je nach wahl der Gastionen Farbeffekte gezielt einstellen lassen. Die Grundstruktur des Wirtsgitters wird durch den Einbau

nicht verändert. Lediglich die Abmessung der Elementarzelle - die Gitterkonstanten - werden durch den Einbau der Fremdionen verändert. Für die Herstellung stabiler Pigmente ist es sinnvoll, von Strukturen auszugehen, die eine besonders große Stabilität aufweisen. Hierzu gehört insbesondere die Spinellstruktur. Durch die partielle oder vollständige Substitution der Metallionen im Spinell durch farbgebende Gastionen wie Chrom und Kupfer können lichtechte Schwarzpigmente erhalten werden.

Als bevorzugte im Handel erhältliche Schwarzpigmente seien Pigment black 11, Echtschwarz 100 und Bayferrox® Schwarztypen (Firma Bayer) genannt.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als weitere bevorzugte Gruppe von Pigmenten sind Weißpigmente zu nennen wie Zinkoxid, Zinksulfid, Bleiweiß ($2\ PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der Formmassen verwendet.

Bevorzugtes schwarzes Farbpigment, das erfindungsgemäß eingesetzt werden kann, ist Ruß, der meist in Form von Furnace- oder Gasruß eingesetzt wird (siehe hierzu G. Benzing, Pigmente für Anstrichmittel, Expert-Verlag (1988), S. 78ff).

Als Ruß sind prinzipiell Produkte geeignet, wie sie z.B. in Encyclopedia of Chemical Technology, Vol. 3, S. 34 ff (Interscience Encyclopedia New York) beschrieben sind.

Das Farbmittel ist in den thermoplastischen Formmassen in Mengen von 0,001 bis 60, vorzugsweise 0,01 bis 30, insbesondere 0,1 bis 10 und ganz besonders 0,2 bis 5 Gew.-% enthalten.

Als Komponente C) können die thermoplastischen Formmassen auch weitere Zusatzstoffe enthalten. Der Anteil dieser Zusätze beträgt im allgemeinen nicht mehr als 70, insbesondere nicht mehr als 50 und ganz besonders nicht mehr als 30 Gew.-%, bezogen auf das Gesamtgewicht der Komponenten A) bis C).

Als Zusatzstoffe seien Schlagzähmodifier genannt, die in Mengen bis zu 20 Gew.-%, bevorzugt bis zu 15 Gew.-% enthalten sein können.

Geeignet sind übliche Kautschuke, z. B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z. B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassen in "Ullmanns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilisatoren, Gleit- und Entformungsmittel in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare Polymere kommen als Zusatzstoffe in Betracht, wobei Polyethylenwachs als Gleitmittel besonders bevorzugt ist.

Als Flammschutzmittel C) können insbesondere roter Phosphor oder phosphorhaltige Verbindungen in Mengen bis zu 20 Gew.-%, bevorzugt bis zu 10 Gew.-%, eingesetzt werden. Beispiele hierfür sind Phosphorsäureester, Phosphinsäureester, Phosphinoxide, Phosphor und org. Phosphate, die in Kombination mit einem Triazinderivat oder Polytetrafluorethylen eingesetzt werden können.

Über Art und Menge dieser Zusatzstoffe lassen sich die gewünschten Eigenschaften der Endprodukte in weitem Maße steuern.

Erfindungsgemäß erfolgt die Herstellung der eingefärbten thermoplastischen Formmassen durch Mischen der Komponenten A) und B) sowie gegebenenfalls C) in einem Extruder bei den für den jeweiligen Thermoplasten gegebenen Verarbeitungstemperaturen innerhalb von 0,1 bis 20, bevorzugt 0,3 bis 3 Minuten.

Wesentlich ist, daß der Thermoplast A) bei der Zugabe des Färbemittels B) noch in fester Form, d.h. als Granulat oder Gries vorliegt. Insbesondere sollte die Zugabe des Farbmittels B) bei Temperaturen von mindestens 10°C, vorzugsweise mindestens 30°C unterhalb der Glasübergangstemperatur ($T_g$) des jeweiligen Thermoplasten A) erfolgen.

Die Glasübergangstemperatur kann mit üblichen Methoden bestimmt werden, z.B. mittels DSC (Differential Scanning Calorimetry) bei Abkühl- und Aufheizraten, welche üblicherweise bei 10 bis 40°C/min liegen. Unter Glasübergangstemperatur im Sinne der Erfindung soll auch der Erweichungspunkt von vorstehenden Thermoplasten A) verstanden werden, welche überwiegend amorph sind (d.h. keine oder wenige kristalline Anteile enthalten).

Besonders bevorzugt erfolgt die Zugabe des Farbmittels B) bei Raumtemperatur.

Das Verfahren kann vorzugsweise auf Ein- oder Zweischneckenextrudern durchgeführt werden. Diese sind vorzugsweise aus einzelnen Gehäusen zusammengesetzt, die temperierbare Mäntel aufweisen. Die Gestaltung der Schnecken kann mit den üblichen Elementen erfolgen, es können Förderelemente (mit oder ohne Schubkanten), Knetelemente und/oder Mischelemente vorhanden sein. Darüber hinaus ist es möglich und häufig vorteilhaft teilweise, d. h. abschnittsweise stauende oder rückfördernde Elemente im Extruder zu verwenden, um Verweilzeit und Mischungseigenschaften zu beeinflussen und zu steuern.

Wegen der selbstreinigenden Eigenschaften und der besseren Einstellbarkeit des Verweilzeitspektrums werden besonders bevorzugt Zweischneckenextruder mit gleichlaufenden Schnecken eingesetzt. Der Extruder ist in mindestens 2, gegebenenfalls auch in mehrere Bereiche unterteilt. Ein Bereich besteht im allgemeinen aus mehreren Zonen, wobei eine Zone üblicherweise eine Länge von 3 D aufweist (der Begriff eine Zone kann auch als ein Schuß bezeichnet werden). Die Gesamtlänge des Extruders beträgt von 12 D bis 45 D, bevorzugt von 24 bis 36 D (D = Durchmesser der Schnecke).

Als besonders geeignet haben sich hierbei folgende Verfahren zur Herstellung erwiesen, indem man

I) in einer ersten Zone
  A) 10 bis 99,999 Gew.-% eines thermoplastischen Polymeren in einen Extruder dosiert und

II) in einer folgenden, bevorzugt in der zweiten Zone bei Temperaturen unterhalb der jeweiligen Glasübergangstemperatur des Thermoplasten A)
  B) 0,001 bis 60 Gew.-% eines Farbmittels

zusetzt und
anschließend in den auf Schritt II folgenden Zonen die Thermoplastmischung erhitzt, die Polymerschmelze homogenisiert und die erhaltene Mischung extrudiert.

Die Verweilzeit in der Stufe I des verfahrens beträgt üblicherweise von 1 s bis 2 min, vorzugsweise von 5 s bis 30 s und die Verweilzeit in der Stufe II des Verfahrens im allgemeinen von 0,5 s bis 1 min, vorzugsweise von 1 s bis 30 s.

Die Zusatzstoffe C) können in der 1. Zone und/oder in die homogene Polymerschmelze zugegeben werden.

Über die Art und Menge der Zusatzstoffe lassen sich die gewünschten Eigenschaften der Endprodukte in weitem Maße steuern.

Es ist deshalb bei faserförmigen Zusatzstoffen vorteilhaft, diese erst nach der Zugabe von Stabilisatoren usw. zuzudosieren und zu einer homogenen Polymerschmelze zu verarbeiten.

In der Nähe der Dosieröffnung im ersten Bereich sind an der Schnecke bevorzugt Förderelemente angebracht, im weiteren Verlauf können sich auch Knetelemente befinden. Am Ende des ersten Bereiches (Aufschmelzzone) ist besonders bevorzugt mindestens ein rückförderndes Element vorhanden, welches die zur Aufschmelzung des Thermoplasten einzuleitende Energieaufnahme unterstützt und mit dem die Verweilzeit im ersten Bereich bis zur Zugabe weiterer Zusatzstoffe beeinflußt werden kann.

Bevorzugt erfolgt die Dosierung des Farbmittels B) in der zweiten Zone des Extruders mit geeigneten Vorrichtungen, vorzugsweise einer kühlbaren oder gekühlten fördernden Stopfschnecke.

Andere geeignete Vorrichtungen sind beispielsweise Schwingrinnen.

Durch die separate Zugabe des Farbmittels B) in den noch in fester Form vorliegenden Thermoplasten A) wird eine gute Verteilung der Farbpartikel erzielt. Formmassen, welche nach dem erfindungsgemäßen Verfahren hergestellt werden, weisen eine bessere Farbkonstanz auf.

Die zeitlichen Abstände zur Herstellung von verschieden gefärbten Kunststoffen werden stark verkürzt.

Das erfindungsgemäße Verfahren weist den Vorteil auf, daß es unabhängig von Art und Menge der einzelnen Komponenten ist.

Die Formmassen eignen sich insbesondere zur Herstellung von Formkörpern durch Spritzguß und Extrusion.

Beispiele

Es wurden folgende Komponenten eingesetzt:

Komponente A
  Polyamid-6.6 (Polyhexamethylenadipinsäureamid) mit einer Viskositätszahl von 151 ml/g, entsprechend einer relativen Viskosität $\eta_{rel}$ von 2,7 (gemessen in 96 gew.-%iger $H_2SO_4$ als 0,5 gew.-%ige Lösung bei 25°C nach ISO 307).

Komponente B

Cu-Phthalocyanin Pigment; pigment green 7 oder C.I. 74260 (Teil 2) (Heliogen®-Grün K 8730 der BASF AG)

Die Formmassen aller Beispiele enthalten:
98 Gew.-% PA 66 und
2 Gew.-% Cu-Phthalocyanin Pigment

Herstellung der Formmassen

Die Komponenten A) und B) wurden auf einen Zweischneckenextruder (120 U/min); 30 kg/h) bei 280°C konfektioniert, verstrangt und im Wasserbad gekühlt sowie granuliert. Das Granulat wurde bei 80°C im Vakuum getrocknet und bei 280°C zu Normprüfkörpern auf eine Spritzgußmaschine verarbeitet.

Bei den Vergleichsbeispielen 1 bis 4 wurde Komponente A) und die Komponente B) mittels zweier Differentialdosierwaagen gemeinsam in die 1. Zone des Extruders zugegeben.

In den Beispielen 5 bis 8 wurde erfindungsgemäß in Zone 1 die Komponente A) und separat in Zone 2 die Komponente B) mittels einer Stopfschnecke zudosiert.

In den Vergleichsbeispielen 9 bis 12 wurde eine Mischung aus A) und B) vorab in einem Taumelmischer hergestellt und diese Mischung in die 1. Zone des Extruders dosiert.

Die weitere Verarbeitung erfolgte wie oben ausgeführt.

Bei den drei unterschiedlichen Versuchsreihen wurden pro Versuch in zeitlichen Abständen von 30 min eingefärbte Granulatproben entnommen. Die Granulatproben wurden anschließend zu Probenplättchen spritzgegossen, an denen farbmetrische Bestimmungen durchgeführt werden konnten.

In der Tabelle sind die Werte der Farbabweichungen ΔE, ΔL, Δa und Δb gegen ein Rückstellmuster aufgetragen. Daneben wurden die Änderungen der Farbabweichungen dΔE, dΔL, dΔa und dAb innerhalb einer aus 4 Granulatproben bestehenden Versuchsreihe angegeben.

Farbmessungen gemäß DIN 5033:

ΔE ≙ Gesamtfarbabstand gemäß DIN 6174
ΔL ≙ Abweichung in Hell-Dunkel Richtung
Δa ≙ Rot-Grün-Abweichung
Δb ≙ Blau-Gelb-Abweichung

Das Vorzeichen +/- definiert die Abweichung gegenüber dem Standard bzw. Bezugspunkt; in diesem Fall diente als Bezugspunkt ein Rückstellmuster mit optimaler Färbung.

ΔL + heller
- dunkler

Δa + roter
- grüner

Δb + gelber
- blauer

Der Gesamtfarbabstand ΔE berechnet sich wie folgt:

$$\Delta E = \sqrt{\Delta L^2 + \Delta a^2 + \Delta b^2}$$

Meßgerät: Datacolor DC 3890
Meßgeometrie: d/8° (diffus)
Meßbedingungen: incl. Glanz
Lichtart: D 65 (Tageslicht)

Die Ergebnisse der Messungen sind der Tabelle zu entnehmen.

| | ΔE | dΔE | ΔL | dΔL | Δa | dΔa | Δb | dΔb |
|---|---|---|---|---|---|---|---|---|
| Beispiel 1 | 1,38 | | 0,20 | | 0,39 | | -1,31 | |
| Beispiel 2 | 1,53 | | 0,43 | | 1,26 | | -0,76 | |
| Beispiel 3 | 2,12 | | 0,08 | | 1,87 | | -1,00 | |
| Beispiel 4 | 1,25 | | 0,21 | | 0,69 | | -1,02 | |
| dΔ 1-4 | | 0,8 | | 0,3 | | 1,5 | | 0,5 |
| Beispiel 5 | 1,38 | | 0,09 | | 0,99 | | -0,95 | |
| Beispiel 6 | 1,28 | | 0,25 | | 0,81 | | -0,96 | |
| Beispiel 7 | 1,17 | | 0,20 | | 0,65 | | -0,95 | |
| Beispiel 8 | 1,43 | | 0,21 | | 1,08 | | -0,92 | |
| dΔ 5-8 | | 0,2 | | 0,2 | | 0,4 | | 0,0 |
| Beispiel 9 | 1,04 | | 0,25 | | 0,19 | | -0,99 | |
| Beispiel 10 | 1,27 | | 0,17 | | 0,86 | | -0,92 | |
| Beispiel 11 | 1,26 | | 0,24 | | 0,87 | | -0,88 | |
| Beispiel 12 | 1,20 | | 0,21 | | 0,63 | | -1,00 | |
| dΔ 9-12 | | 0,3 | | 0,1 | | 0,7 | | 0,1 |

**Patentansprüche**

**1.** Kontinuierliches Verfahren zur Herstellung von eingefärbten thermoplastischen Formmassen in einem Extruder, dadurch gekennzeichnet, daß man

I) in einer ersten Zone
A) 10 bis 99,999 Gew.-% eines thermoplastischen Polymeren in einen Extruder dosiert und

II) in einer folgenden Zone bei Temperaturen unterhalb der jeweiligen Glasübergangstemperatur des Thermoplasten A)
B) 0,001 bis 60 Gew.-% eines pulverförmigen Farbmittels

zusetzt und
anschließend die Thermoplast/Farbmittel-Mischung in den folgenden Zonen erhitzt sowie die Polymerschmelze homogenisiert und die erhaltene Mischung extrudiert.

**2.** Verfahren nach Anspruch 1, dadurch gekennzeichnet, daß man in die 1. Zone und/oder in die homogene Polymerschmelze 0 bis 70 Gew.-% weitere Zusatzstoffe C) zugibt, wobei die Gewichtsprozente der Komponenten A) bis C) jeweils 100 % ergeben.

**3.** Verfahren nach den Ansprüchen 1 oder 2, dadurch gekennzeichnet, daß man in der Stufe II das Farbmittel B) bei Temperaturen von mindestens 10°C unterhalb der jeweiligen Glasübergangstemperatur des Thermoplasten A) zugibt.

**4.** verfahren nach den Ansprüchen 1 bis 3, dadurch gekennzeichnet, daß man das Farbmittel B) bei Raumtemperatur zugibt.

**5.** verfahren nach den Ansprüchen 1 bis 4, dadurch gekennzeichnet, daß man thermoplastische Polymere A) ausgewählt aus der Gruppe der Polyoxymethylene, Polyamide, Polyester, vinylaromatischen Polymeren, Polyarylenether, Polyolefine, Polycarbonate, Poly(meth)acrylate oder deren Mischungen einsetzt.

**6.** Verfahren nach den Ansprüchen 1 bis 5, dadurch gekennzeichnet, daß man als Farbmittel B) ein Pigment einsetzt.

**7.** Verfahren nach den Ansprüchen 1 bis 6, dadurch gekennzeichnet, daß man das Farbmittel B) mittels einer Stopfschnecke in den Extruder einbringt.

## Claims

**1.** A continuous process for preparing pigmented thermoplastic molding compositions in an extruder, which comprises

I) in a first zone
A) metering in from 10 to 99.999 % by weight of a thermoplastic polymer into an extruder and

II) in a subsequent zone at temperatures below the respective glass transition temperature of the thermoplastic A)
B) adding from 0.001 to 60 % by weight of a pulverulent colorant

and
then heating the thermoplastic/colorant mixture in the subsequent zones, homogenizing the polymer melt and extruding the resultant mixture.

**2.** A process as claimed in claim 1, wherein from 0 to 70 % by weight of other additives C) are added into the first zone and/or into the homogeneous polymer melt, where the percentages by weight of components A) to C) respectively give a result of 100 %.

**3.** A process as claimed in claim 1 or 2, wherein, in step II, the colorant B) is added at a temperature which is in each case at least 10°C below the glass transition temperature of the thermoplastic A).

**4.** A process as claimed in any of claims 1 to 3, wherein the colorant B) is added at room temperature.

**5.** A process as claimed in any of claims 1 to 4, wherein use is made of thermoplastic polymers A) selected from the class consisting of polyoxymethylenes, polyamides, polyesters, vinylaromatic polymers, polyarylene ethers, polyolefins, polycarbonates, poly(meth)acrylates or mixtures of these.

**6.** A process as claimed in any of claims 1 to 5, wherein a pigment is used as colorant B).

**7.** A process as claimed in any of claims 1 to 6, wherein the colorant B) is introduced into the extruder by means of a stuffing screw.

## Revendications

**1.** Procédé continu de préparation de masses de moulage thermoplastiques colorées dans une extrudeuse, caractérisé en ce que

I) dans une première zone
A) on dose 10 à 99,999% en poids d'un polymère thermoplastique dans une extrudeuse, et
II) dans une zone suivante à des températures en dessous de la température de transition vitreuse respective de la substance thermoplastique A),
B) on ajoute 0,001 à 60% en poids d'un colorant pulvérulent, et

ensuite on chauffe le mélange de substance thermoplastique/colorant dans les zones suivantes, et on homogénéise la masse fondue polymère et on extrude le mélange obtenu.

**2.** Procédé suivant la revendication 1, caractérisé en ce qu'on ajoute 0 à 70% en poids d'autres additifs C) dans la première zone et/ou dans la masse fondue polymère homogène, les % en poids des composants A) à C) donnant chaque fois 100%.

**3.** Procédé suivant l'une des revendications 1 et 2, caractérisé en ce que, dans l'étape II, on ajoute le colorant B) à des températures d'au moins 10°C en dessous de la température de transition vitreuse respective de la substance

thermoplastique A).

4. Procédé suivant l'une des revendications 1 à 3, caractérisé en ce qu'on ajoute le colorant B) à la température ambiante.

5. Procédé suivant l'une des revendications 1 à 4, caractérisé en ce qu'on met en oeuvre des polymères thermoplastiques A) choisis parmi le groupe des polyoxyméthylènes, des polyamides, des polyesters, des polymères vinyl-aromatiques, des éthers de polyarylène, des polyoléfines, des polycarbonates, des poly(méth)acrylates ou leurs mélanges.

6. Procédé suivant l'une des revendications 1 à 5, caractérisé en ce que, comme colorant B), on met en oeuvre un pigment.

7. Procédé suivant l'une des revendications 1 à 6, caractérisé en ce qu'on introduit le colorant B) dans l'extrudeuse au moyen d'une vis de bourrage.